# EUROPEAN PATENT SPECIFICATION

(11) **EP 0 604 908 B1**
(45) Date of publication and mention of the grant of the patent: **19.09.2001**
(21) Application number: 93120798.9
(22) Date of filing: 23.12.1993
(51) Int. Cl.: C07F 17/00, C08F 10/00, C08F 4/642

(54) **Process for the polymerisation of alpha-olefins using metallocene compounds having ligands of fluorenylic type**
Verfahren zur Polymerisierung von Alpha-Olefinen mittels Metalloceneverbindungen mit Liganden des Typs Fluorenyl
Procédé de polymérisation d'oléfines alpha utilisant des composés de type métallocène possédant les ligands du type fluorènylique

(30) Priority: 30.12.1992 IT MI922988
(43) Date of publication of application: 06.07.1994
(73) Proprietor: Basell Technology Company B.V., 2132 MS Hoofddorp (NL)
(72) Inventor: Resconi, Luigi, I-44100 Ferrara (IT); Jones, Robert Lawrence, Elkton, Maryland 21921 (US)
(74) Representative: Zanoli, Enrico

(56) References cited:
- EP-A- 0 512 554
- EP-A- 0 530 908
- CA-A- 2 067 525
- DATABASE WPI, Week 8946, Derwent Publications Ltd., London, GB, Class , AN 89-335914 46!, MITSUBISHI METAL KK: "Potassium salt of di:methyl silicon di:fluorene - used to prepare highly active organo-lanthanide hydride(s) used e.g. for ethylene polymerisation",

## Description

The present invention relates to a process for the polymerization of olefins particularly propylene or higher α-olefins, using metallocene compounds having ligands of fluorenylic type.

U.S. Patent 4,542,199 describes a catalytic system for the polymerization of olefins comprising a bis(cyclopentadienyl)zirconium and an alumoxane. From the polymerization reaction of propylene carried out in the presence of this catalyst, low molecular weight atactic polypropylene is obtained.

European Patent 283,739 describes a catalytic systems for the polymerization of oleins comprising a bis(cyclopentadienyl)zirconium partially substituted and an alumoxane. From the polymerization of propylene carried out in the presence of this catalyst a low molecular weight atactic polypropylene is obtained.

In U.S. Patent 4,931,417 catalysts for the polymerization of olefins comprising a metallocene wherein two cyclopentadienyl rings are linked through a radical containing a silicon or germanium atom are described. The polymerization reaction of propylene carried out in the presence of the above mentioned compounds partially substituted on the cyclopentadienyl rings gives raise to isotactic polypropylene, whereas with dimethylsilandiylbis(cyclopentadienyl)zirconium dichloride, low molecular weight atactic polypropylene is obtained.

CA-A-2 067 525 discloses metallocenes containing a fluorenyl based ligand to be used in olefin polymerization processes. Some specific examples of metallocenes are given. In the polymerization reactions using said metallocenes, the obtained polymers are syndrotactic often crystalline.

In Japanese Patent Application Publication No. 1 249 782, the preparation of the potassium sal of the bis(fluorenyl)-dimethylsilane to be used for preparing organo-lantanide hydrides is described. These are useable as catalysts for the hydrogenation of olefins of every type and for the polymerization of ethylene.

Metallocenes having two fluorenyl rings bridge-linked which can be advantageously used as catalytic components for the polymerization of olefins and, expecially, for the preparation of high molecular weight atactic polypropylene, have been surprisingly found.

Therefore, an object of the present invention is a process for polymerizing propylene or higher α-olefins, said process comprising polymerizing propylene or a higher α-olefin in the presence of a catalyst, said catalyst comprising the product of the reaction between: A) a metallocene of the formula (I) 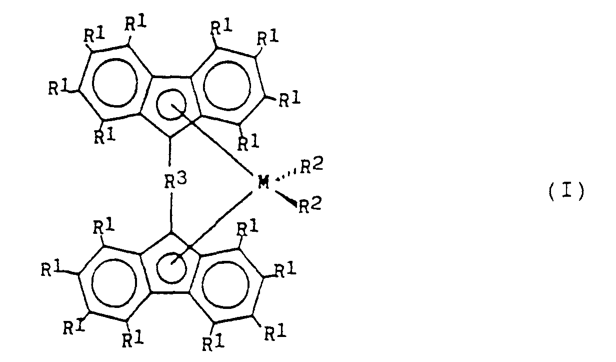 wherein substituents R¹, the same or different from each other, are hydrogen atoms, C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals, or C₇-C₂₀ arylalkyl radicals, optionally two adjacent substituents R¹ can form a cycle comprising from 5 to 8 carbon atoms and, furthermore, substituents R¹ can contain Si or Ge atoms;
M is Ti, Zr or Hf;
substituents R², the same or different from each other, are halogen atoms, -OH, -SH, R¹, -OR¹, -SR¹, -NR¹₂ or PR¹₂, wherein R¹ is defined as above;
the group R³ is selected from >CR¹₂, >SiR¹₂, >GeR¹₂, >NR¹ or >PR¹, wherein R¹ is defined as above and optionally, when R³ is >CR¹₂, >SiR¹₂ or >GeR¹₂, both substituents R¹ can form a cycle comprising from 3 to 8 atoms, said metallocenes optionally being in the form of a reaction product with an aluminium organometallic compound of formula AlR⁴₃ or Al₂k⁴₆, wherein substituents R⁴, the same or different from each other are R¹ or halogen, and

(B) an alumoxane, optionally mixed with an aluminum organo-metallic compound of formula AlR⁴₃ or Al₂R⁴₆, wherein substituents R⁴, the same or different from each other, are defined as above, or one or more compounds able to give a metallocene alkyl cation.

Preferred substituents R¹ are hydrogen, C₁-C₁₀ alkyl radicals, more preferably C₁-C₃; C₃-C₁₀ cycloalkyl radicals, more preferably C₃-C₆; C₂-C₁₀ alkenyl radicals, more preferably C₂-C₃, C₆-C₁₀ aryl radicals, C₇-C₁₀ alkylaryl radicals or C₇-C₁₀ arylalkyl radicals. Alkyl radicals can be linear or brancehd, in addition to cyclic.

Substituents R² are preferably halogen atoms or groups R¹. More preferably, they are chlorine or methyl radicals.

The group R³ is preferably a group >SiR¹₂. More preferably it is a group >Si(CH₃)₂.

Non limitative examples of metallocenes of formula (I) are : dimethylsilandiylbis(fluorenyl)titanium dichloride, dimethylsilandiylbis(fluorenyl)zirconium dichloride, dimethylsilandiylbis(fluorenyl)hafnium dichloride, dimethylsilandiylbis(fluorenyl)zirconium dimethyl, dimethylsilandiylbis(fluorenyl)hafnium dimethyl, dimethylsilandiylbis(fluorenyl)titanium dimethyl, isopropylidenbis(fluorenyl)titanium dichloride, isopropylidenbis(fluorenyl)zirconium dichloride, isopropylidenbis(fluorenyl)hafnium dichloride, isopropylidenbis(fluorenyl)titanium dimethyl, isopropylidenbis(fluorenyl)zirconium dimethyl, isopropylidenbis(fluorenyl)hafnium dimethyl, dimethylgermandiylbis(fluorenyl)titanium dichloride, dimethylgermandiylbis(fluorenyl)zirconium dichloride, dimethylgermandiylbis(fluorenyl)hafnium dichloride, dimethylgermandiylbis(fluorenyl)titanium dimethyl, dimethylgermandiylbis(fluorenyl)zirconium dimethyl, dimethylgermandiylbis(fluorenyl)hafnium dimethyl, dimethylsilandiylbis(1-methylfluorenyl)titanium dichloride, dimethylsilandiylbis(1-methylfluorenyl)zirconium dichloride, dimethylsilandiylbis(1-methylfluorenyl)hafnium dichloride, dimethylsilandiylbis(1-methylfluorenyl)titanium dimethyl, dimethylsilandiylbis(1-methylfluorenyl)zirconium dimethyl, dimethylsilandiylbis(1-methylfluorenyl)hafnium dimethyl.

The metallocenes of formula (I) can be prepared by a, process comprising:
(a) the reaction of a compound of formula (II) 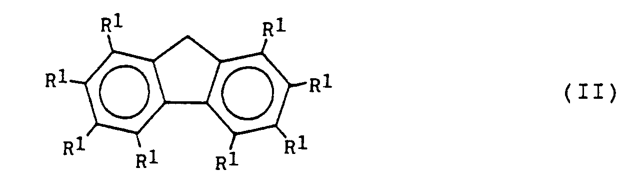 wherein substitutents R¹, the same or different from each other, are defined as above, with a compound able to form the anion of formula (III) 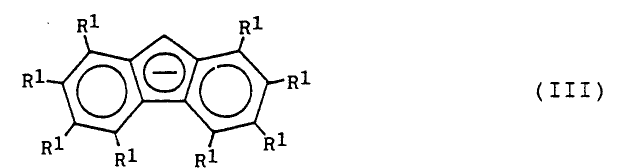 and thereafter with a compound of formula R³X₂, wherein R³ is defined as above, and the substituents X, same or different from each other, are halogen atoms, thus obtaining a compound of formula 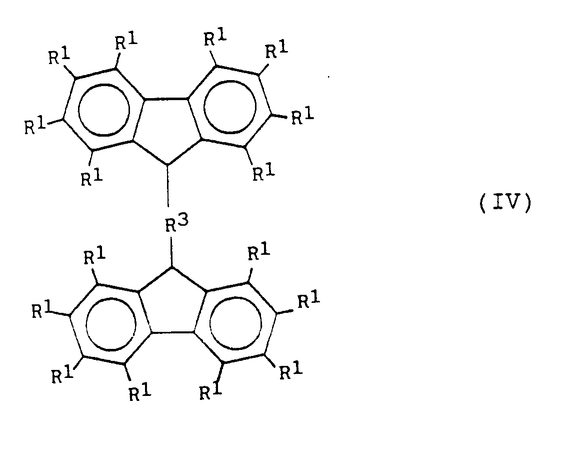
(b) the subsequent reaction of the compound of formula (IV) obtained at point (a) with a compound able to form the dianion of formula (V) 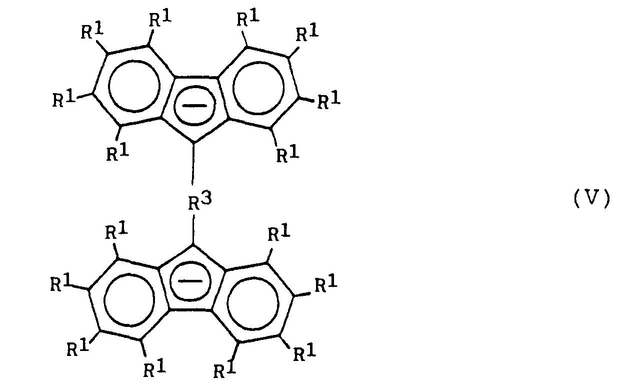 and thereafter with a compound of formula MX₄, wherein M and substituents X are defined as above, thus obtaining the compound of formula (VI) 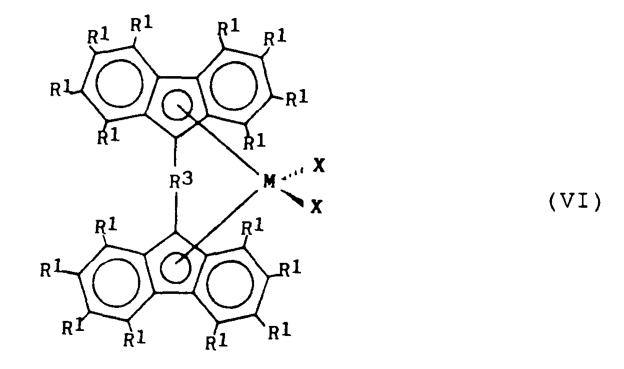 and finally,
(c) in the case at least one R² in the metallocene of formula (I) to be prepared is different from halogen, the substitution of at least one substituent X in the compound of formula (VI) with at least one R² different from halogen.

Non limitative examples of compounds able to form anionic compounds of formula (III) and (V) are methyllithium, n-butyllithium, potassium hydride, metallic sodium or potassium.

Non limitative examples of compounds of formula R³X₂ are dimethyldichlorosilane, diphenyldichlorosilane, dimethyldichlorogermanium, 2,2-dichloropropane. Dimethyldichlorosilane is particularly interesting.

Non limitative examples of compounds of formula MX₄ are titanium tetrachloride, zirconium tetrachloride, hafnium tetrachloride. Particularly interesting is zirconium tetrachloride.

The substitution reaction of substituents X in the compound of formula (VI) with substituents R² different from halogen is carried out by generally used methods. For example, when substituents R² are alkyl groups, the compound of formula (VI) can be reacted with alkylmagnesium halides (Grignard reagents) or with lithioalkyl compounds.

According to an embodiment of the process the synthesis of the ligand of formula (IV) is suitably performed by adding a solution of an organic lithium compound in an aprotic solvent to a solution of the compound (II) in an aprotic solvent. Thus, a solution containing the compound (II) in the anionic form is obtained and this is added to a solution of the compound of formula R³X₂ in an aprotic solvent.

From the solution obtained by working as above described, the ligand of formula (IV) is separated by generally used methods. This is dissolved in an aprotic polar solvent, and to this solution a solution of an organic lithium compound in an aprotic solvent is added. The ligand (IV) is thus obtained and is separated, dissolved in an aprotic polar solvent and thereafter added to a suspension of the compound MX₄ in an apolar solvent. At the end of the reaction the solid product obtained is separated from the reaction mixture by generally used techniques.

During the whole process, the temperature is kept between -180°C and 80°C and, preferably, between -20°C and 40°C.

As apolar solvents hydrocarbon solvents such as pentane, hexane, benzene and the like can be suitably used.

Non limitative examples of aprotic polar solvents are tetrahydrofurane, dimethoxyethane, diethylether, toluene, dichloromethane and the like.

Catalysts for use in the process of the present invention comprise the product of the reaction between:
(A) a metallocene of formula (I), optionally as reaction product with an aluminium organo-metallic compound of formula AlR⁴₃ or Al₂R⁴₆, wherein substituents R⁴, the same or different from each other, are R¹ or halogen, and
(B) an alumoxane, optionally mixed with an aluminium organo-metallic compound of formula AlR⁴₃ or Al₂R⁴₆, wherein substituents R⁴, the same or different from each other, are defined as above, or one or more compounds able to give a metallocene alkyl cation.

The alumoxane used as component (B) can be obtained by reaction between water and an organometallic compound of aluminium of formula AlR₃ or Al₂R⁴₆, wherein substituents R⁴, the same or different from each other, are defined as above, with the provision that at least one R⁴ is different from halogen. In that case, these are reacted in molar ratios Al/water comprised between about 1:1 and 100:1.

The molar ratio between aluminium and the metal of the metallocene is comprised between about 10:1 and about 5000:1, and preferably between 100:1 and 4000:1.

Metallocenes of formula (I) particularly suitable are those wherein M=Zr, substituents R¹ are hydrogen atoms, substituents R² are chlorine or methyl groups, and the group R³ is a radical >Si(CH₃)₂ such as, for example, dimethylsilandiylbis(fluorenyl)zirconium dichloride.

The alumoxane used in the catalyst according to the invention is a linear, branched or cyclic compound, containing at least one group of the type: 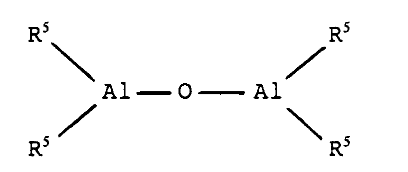 wherein substituents R⁵, the same or different from each other, are R¹ or a group -0-Al(R⁵)₂, and optionally some R⁵ can be halogen or hydrogen atoms.

In particular, it is possible to use alumoxanes of formula: 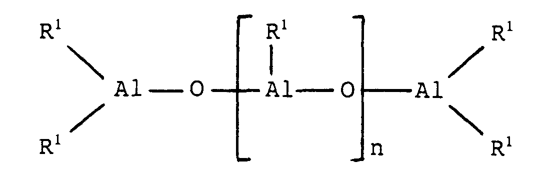 in the case of linear compounds, wherein n is 0 or an integer comprised between 1 and 40, or alumoxanes of formula: 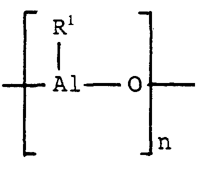 in the case of cyclic compounds, wherein n is an integer comprised between 2 and 40.

Radicals R¹ are preferably methyl, ethyl or isobutyl. Examples of alumoxanes suitable for the use according to the present invention are methylalumoxane (MAO) and isobutylalumoxane (TIBAO).

Non limitative examples of aluminium compounds of formula AlR₃ or Al₂R⁴₆ are:

| | | | |
|---|---|---|---|
| Al(Me)₃, | Al(Et)₃, | AlH(Et)₂, | Al(iBu)₃, |
| AlH(iBu)₂, | Al(iHex)₃, | Al(C₆H₅)₃, | Al(CH₂C₆H₅)₃, |
| Al(CH₂CMe₃)₃, | Al(CH₂SiMe₃)₃, | Al(Me)₂iBu, | Al(Me)₂Et, |
| AlMe(Et)₂, | AlMe(iBu)₂, | Al(Me)₂iBu, | Al(Me)₂Cl, |
| Al(Et)₂Cl, | AlEtCl₂, | Al₂(Et)₃Cl₃, | |

wherein Me=methyl, Et=ethyl, iBu=isobutyl, iHex=isohexyl.

Among the above mentioned aluminium compounds, trimethylaluminium and triisobutylaluminium are preferred.

Non limitative examples of compounds able to form a metallocene alkyl cation are compounds of formula Y⁺Z⁻, wherein Y⁺ is a Bronsted acid, able to give a proton and to react irreversibly with a substituent R² of the metallocene of formula (I), and Z⁻ is a compatible anion, which does not coordinate, which is able to stabilize the active catalytic species which originates from the reaction of the two compounds and which is sufficiently labile to be able to be removed from an olefinic substrate. Preferably, the anion Z⁻ comprises one or more boron atoms. More preferably, the anion Z⁻ is an anion of the formula BAr⁽⁻⁾₄, wherein substituents Ar, the same or different from each other, are aryl radicals such as phenyl, pentafluorophenyl, bis(trifluoromethyl)phenyl. Particularly preferred is the tetrakis-pentafluorophenyl borate. Furthermore, compounds of formula BAr₃ can be suitably used.

The catalysts used in the process of the present invention can be also used on inert supports. This is obtained by depositing the metallocene (A), or the product of the reaction of the same with the component (B), or the component (B) and thereafter the metallocene (A), on inert supports such as for example silica, alumina, styrene-divinylbenzene copolymers or polyethylene.

The solid compound thus obtained, combined with a further addition of alkylaluminium compound either as such or prereacted with water, if necessary, is usefully used in the gas phase polymerization.

In particular, the process according to the present invention can be suitably used for the homopolymerization of alpha-olefins such as propylene or 1-butene. Another use of interest of the catalysts of the invention is in the copolymerization reactions of ethylene with alpha-olefins such as propylene and 1-butene.

The polymerization process according to the present invention can be carried out either in liquid phase, in the presence or not of an inert aliphatic or aromatic hydrocarbon solvent, such as hexane or toluene, or in gas phase.

The polymerization temperature in processes for the ethylene or propylene homopolymerization is generally comprised between -50°C and 250°C, in particular between 40°C and 90°C.

The molecular weight of the polymers can be varied merely by varying the polymerization temperature, the type or the concentration of the catalytic components or by using molecular weight regulators such as, for example, hydrogen.

The molecular weight distribution can be changed using mixtures of different metallocenes, or carrying out the polymerization in more steps differing as to polymeri-zation temperatures and/or concentrations of the molecular weight regulator.

Polymerization yields depend on the purity of the metallocene component of the catalyst. Therefore, metallocenes obtained from the process of the invention can be used either as such or subjected to purification treatments.

The components of the catalyst can be contacted among them before the polymerization. The contact time is generally comprised between 1 and 60 minutes, preferably between 5 and 20 minutes.

Fig. 1 reports the ¹H-NMR spectrum of the dimethylbis-fluorenylsilane ligand of the Example 1(A).

Fig. 2 reports the ¹H-NMR spectrum of the dimethylsilandylbis(fluorenyl)zirconium dichloride of the Example 1(B).

The following examples are given to illustrate and not to limit the invention.

### CHARACTERIZATIONS

The intrinsic viscosity [η] was measured in tetrahydronaphtalene at 135°C.

The molecular weight distribution was determined by GPC analysis carried out by an apparatus WATERS 150 in orthodichlorobenzene at 135°C.

The Differential Scanning Calorimetry (DSC) measurements were carried out on an apparatus DSC-7 of Perkin-Elmer Co. Ltd. according to the following procedure. About 10 mg of sample were heated at 200°C with a scanning speed equal to 20°C/minute; the sample was kept at 200°C for 5 minutes and thereafter was cooled with a scanning speed equal to 20°C/minute. Thereafter a second scanning equal to 20°C/min was carried out according to the same modalities of the first one. The values reported are those obtained in the second scanning.

### EXAMPLE 1 - Synthesis of the catalysts

### (A) Synthesis of dimethylbis(9-fluorenyl)silane - (CH₃)₂Si(Flu)₂

To a solution obtained by dissolving 50 g (300 mmol) of fluorene in 350 ml of tetrahydrofuran (THF), kept under stirring at the temperature of 0°C, 120 ml of a 2.5 M hexane solution of n-butyllithium were added dropwise, whili maintaining the temperature at 0°C. After the addition was complete, the solution was warmed to room temperature and stirring was continued for 5 hours after gas evolution had ceased.

The resulting solution was then added dropwise to a stirring solution obtained by dissolving 19.4 g (0.15 mol) of dimethyldichlorosilane in 100 ml of THF, maintained at 0°C during the addition. After the addition was complete, the solution was warmed to room temperature and stirring was continued for 14 hours.

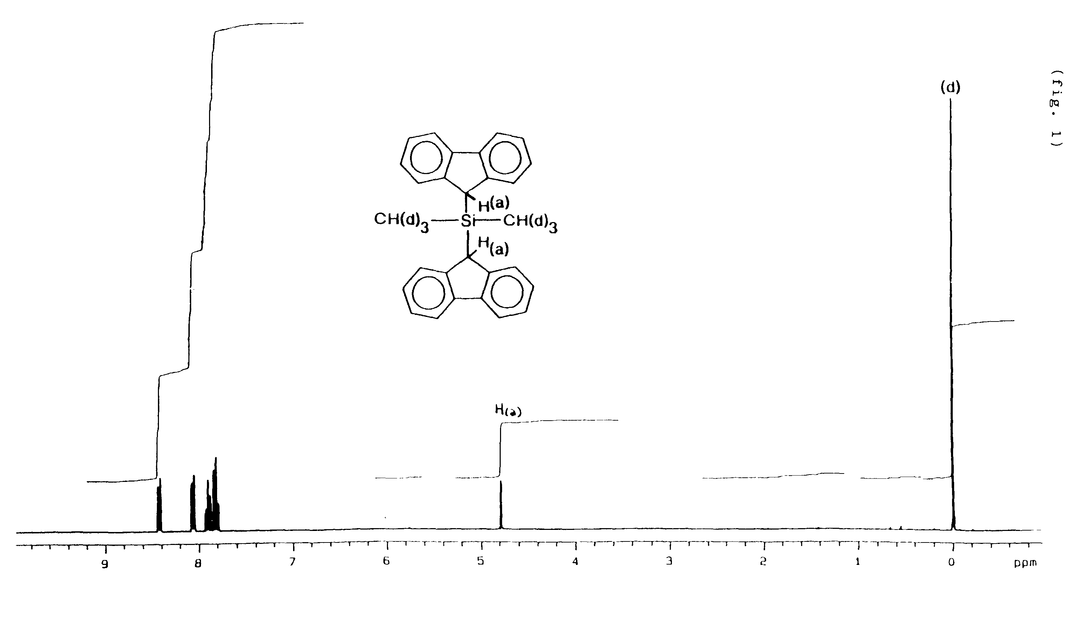

The reaction was quenched with water and the organic phase collected and dried over MgSO₄. Solvents were removed in vacuo and the solids collected were recrystallized from hexane, yielding 37 g (63%) of dimethylbis(9-fluorenyl)silane, whose structure and chemical purity have been confirmed by GC-MS and ¹H-NMR (Fig. 1).

### (B) Synthesis of dimethylsilanediylbis(9-fluorenyl) zirconium dichloride - Me₂SiFlu₂ZrCl₂

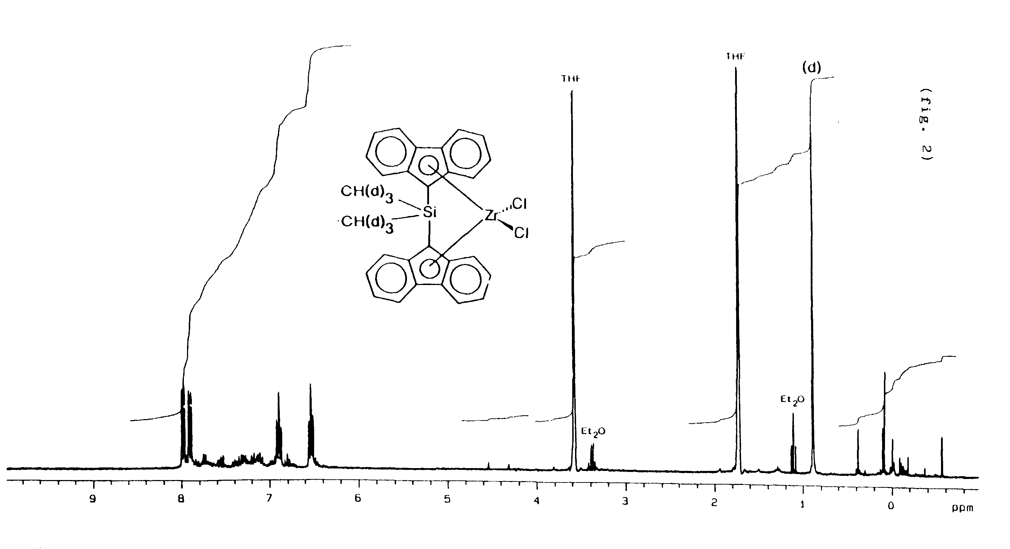

To a solution prepared by dissolving 8.5 g (21.9 mmol) of (CH₃)₂Si(Flu)₂ obtained under (A) in 150 ml of diethylether (Et₂O), kept under rapid stirring at the temperature of 0°C, 32.5 ml of a 1.4M solution of methyllithium in Et₂O were added. After the addition was complete, the mixture was warmed to room temperature and stirring was continued for 5 hours after gas evolution had ceased. The resulting suspension was cooled to -78°C and then added to a rapidly stirring slurry of 5.1 g of ZrCl₄ (21.9 mmol) in 150 ml of pentane, also kept at -78°C. After the addition was complete, the reaction mixture was slowly warmed to room temperature and stirring was continued for 17 hours. Solvents were then removed by filtration and the solids collected were washed with Et₂O and then pentane. The bright red complex was dried to free-flowing powder under vacuum at room temperature, yielding 13.1 g of Me₂SiFlu₂ZrCl₂, whose structure and chemical purity have been confirmed by GC-MS and ¹H-NMR (Fig. 2).

### (C) Synthesis of dimethylsilanediylbis(9-fluorenyl) zirconium dimethyl - Me₂SiFlu₂ZrMe₂

6.0 g of dimethylsilanediylbis(9-fluorenyl)zirconium dichloride obtained under (B) were suspended in 50 ml Et₂O. 7.29 ml of a 3.0 M solution of methylmagnesium bromide in Et₂O were added dropwise to the rapidly stirring slurry, which was maintained at 0°C during the addition.

After the addition was complete, the mixture was allowed to warm to room temperature and stirring continued for additional 17 hours. The solids were collected by filtration, washed with Et₂O and pentane and finally dried under vacuum. 6.5 g of Me₂SiFlu₂ZrMe₂ were obtained, whose structure and chemical purity have been confirmed by GC-MS and ¹H-NMR.

### (D) Synthesis of dimethylsilanediylbis(9-fluorenyl) hafnium dichloride - Me₂SiFlu₂HfCl₂

8.5 g (21.9 mmol) of dimethylbis(9-fluorenyl)silane obtained under (A) were dissolved in 150 ml of Et₂O. 32.5 ml of a 1.4 M solution of methyllithium in Et₂O were added dropwise to the rapidly stirring solution, which was maintained at 0°C during the addition. After the addition was complete, the solution was warmed to room temperature and stirring was continued for 17 hours.

The solids were collected by filtration, washed with Et₂O and resuspended in Et₂O. The resulting slurry was then cannulated dropwise into a rapidly stirring suspension of 7.01 g of HfCl₄ (21.8 mmol) in 100 ml of pentane at -78°C. After the additions was complete, the reaction mixture was slowly warmed to room temperature and stirring was continued for 17 hours. Solvents were then removed by filtration and the solids collected were washed with Et₂O and then pentane. The bright orange complex was dried to a free-flowing powder under vacuum at room temperature. Yield 13.1 g.

### (E) Synthesis of dimethylsilanediylbis(9-fluorenyl) hafnium dimethyl - Me₂SiFlu₂HfMe₂

4.0 g of dimethylsilanediylbis(9-fluorenyl)hafnium dichloride obtained under (D) were suspended in 50 ml Et₂O. 4.19 mL of a 3.0 M solution of methylmagnesium bromide in Et₂O were added dropwise to the rapidly stirring slurry, which was maintained at 0°C during the addition.

After the addition was complete, the mixture was allowed to warm to room temperature and stirring continued for additional 17 hours. The solids were collected by filtration, washed with Et₂O and pentane and finally dried under vacuum. 3.9 g of an orange product were obtained. The structure and chemical purity of Me₂SiFlu₂HfMe₂ have been confirmed by GC-MS and ¹H-NMR.

### (F) Preparation of the cocatalysts

### Methylalumoxane (MAO)

A commercial (Witco, MW 1400) 30% toluene solution of MAO was dried in vacuo until a solid, glassy material was obtained which was finely crushed and further treated in vacuo until all volatiles were removed (4-6 hours, 0.1 mmHg, 40-50°C) to leave a white, free-flowing powder.

### Isobutylalumoxane (TIBAO)

The commercial (Witco) 30% cyclohexane solution was used as received.

### Modified-methylalumoxane (M-MAO)

The commercial (Ethyl) isopar C solution (62 g Al/l) was used as received.

### B(C₆F₅)₃

Was prepared as described in Massey, A.G, Park, A.J., J. Organomet. Chem. 1964, 2, 245.

12.8 ml of bromopentafluorobenzene were dissolved in 430 ml of pentane and cooled to -78°C. To this solution, 64.2 ml of butyllithium (1.6 M in hexane) were slowly added while keeping the temperature at -78°C. After the addition was complete, 33 ml of a 1.0 M solution of BCl₃ in hexane previously cooled to -50°C were quick added to the reaction mixture, which was then stirred for 15 min and finally allowed to warm to room temperature. A precipitate formed. Stirring was continued for 16 hours, then the solution was filtered and the volatiles removed in vacuo. 11.31 g of a white, crystalline product were obtained.

### EXAMPLE 2 - Polymerization of propylene

480 g of propylene were charged in a 1.4-l jacketed stainless-steel autoclave, equipped with magnetically driven stirrer, 35-ml stainless-steel vial and thermoresitance, connected to a thermostat for temperature control, previously dried at 70°C in a stream of propylene. The autoclave was then thermostatted at 40°C. 11.5 ml of a toluene solution containing 1.5 mg of Me2SiFlu₂ZrCl₂ prepared as described in example 1(B) and 326 mg of MAO were stirred 5 min at room temperature and then injected in the autoclave by means of propylene pressure through the stainless-steel vial, the temperature rapidly raised to 50°C and the polymerization carried out at constant temperature for 1 hour. 21 g of solid, transparent, amorphous polypropylene were obtained. This product has an intrinsic viscosity of 2.28 dl/g and is completely soluble in warm CHCl₃. The GPC analysis gives M_{w}=377,000 and M_{w}/Mₙ= 2.64.

### EXAMPLES 3-6 - Polymerization of propylene

The polymerizations were carried out with the procedure described in Example 2. The amount of Me2SiFlu₂ZrCl₂ used was 4 mg. The amounts of MAO and of toluene used, the polymerization yields and the intrinsic viscosities of the obtained polymers are reported in Table 1.

### EXAMPLE 7 - Polymerization of propylene

1 l of hexane and 270 g of propylene were charged in a 2.3-l jacketed stainless-steel autoclave, equipped with magnetically driven stirrer, 35-ml stainless-steel vial and thermoresistance, connected to a thermostat for temperature control, previously dried at 70°C in a stream of propylene. The autoclave was then thermostatted at 40°C. 14.3 ml of a toluene solution containing 8 mg of Me₂SiFlu₂Cl₂ prepared as described in example 1(B) and 211 mg of MAO were stirred 5 min at room temperature and then injected in the autoclave by means of propylene pressure through the stainless-steel vial, the temperature rapidly raised to 50°C and the polymerization carried out at constant temperature for 1 hour. The polymerization was quenched by adding a small amount of methanol. The clear, viscous hexane solution was evaporated and the solid residue further essiccated in vacuo at 60°C. 46 g of solid, transparent, amorphous polypropylene were obtained. This product has an intrinsic viscosity of 1.96 dl/g.

### EXAMPLE 8 - Polymerization of propylene

The polymerization was carried out as in Example 2, but using 3.4 ml of an M-MAO solution containing 2 mg of MeSiFlu₂ZrMe₂ prepared as described in example 1(C). 80 g of a solid, transparent, amorphous polypropylene were obtained. This product has an intrinsic viscosity of 2.1 dl/g.

### EXAMPLE 9 - Polymerization of propylene

In a Büchi 1-L jacketed glass autoclave, equipped with a helical stirrer and a thermoresistance, connected to a thermostat for temperature control, previously washed with a solution of AliBu₃ in hexane and then dried at 60°C under a nitrogen stream, were charged 0.4 l of hexane (purified by passing through an activated alumina column) and 0.224 mmol of AliBu₃ (0.2 M solution in hexane). The autoclave was then thermostatted at 50°C. 6.1 ml of a solution prepared by adding 1.1 ml of a 0.021 M solution of B(C₆F₅)₃ in hexane to 5 ml toluene containing 0.0488 mmol AliBu₃ and 5.7 mg of Me₂SiFlu₂ZrMe₂ prepared as described in example 1(C) were injected in the autoclave at 50°C. Propylene was pressurized in until the pressure reached 4 bar, and the polymerization carried out at constant pressure for 1 hour. The polymerization was quenched by adding a small amount of methanol. The clear, viscous hexane solution was evaporated and the solid residue further essiccated in vacuo at 60°C. 27.5 g of solid, transparent, amorphous polypropylene were obtained. This product has an intrinsic viscosity of 1.64 dl/g.

### EXAMPLE 10 - Polymerization of propylene

The polymerization was carried out as in Example 2, but the catalyst was prepared by dissolving Me₂SiFlu₂ZrCl₂ in a toluene solution of MAO, such as the Al/Zr ratio was 550 molar, then removing the solvent in vacuo until a free-flowing light geen-blue powder was obtained. 186 mg of this powder were charged in the autoclave before the monomer was added. The polymerization was carried out for 120 min at 50°C, 183 g of solid, transparent, amorphous polypropylene were obtained, having an intrinsic viscosity of 2.65 dl/g.

### EXAMPLE 11 - Polymerization of propylene

The polymerization was carried out as in Example 10, but in the gas phase, using 64 g of NaCl as the disperdant. 196 mg of the same catalyst powder used in Example 12 were charged in the autoclave before the monomer was pressurized in at 13 bar. The polymerization was carried out for 240 min at 50°C. 100 g of solid, transparent, amorphous polypropylene were obtained, having an intrinsic viscosity of 2.26 dl/g.

### EXAMPLE 12 - Polymerization of propylene

17.1 mg of the metallocene obtained in example 1(B) and 348.5 mg of MAO were dissolved in 10 ml of toluene. 0.8 ml of this solution were transferred in 10 ml of toluene solution containing 241.4 mg of MAO and the resulting solution was injected under propylene atmosphere into a glass Büchi autoclave containing 90 ml of toluene, heated at 50°C and stirred by a magnetic bar.

The whole was pressurized at 4 bar-a with propylene and was allowed to polymerize for 1 hr. After having interrupted the experiment by addition of methanol, the polymer was coagulated with methanol in excess, filtered, dried in vacuum, extracted with hot chloroformium and dried again.

4.85 g of solid, transparent polypropylene were obtained, having intrinsic viscosity of 1.06 dl/g, which at the DSC do not show any melting point. The GPC analysis gave the following values : M_{w} = 122,000; M_{w}/Mₙ = 3.7.

### EXAMPLE 13 - Polymerization of propylene

Into a 1 liter glass Büchi autoclave, provided with jacket, screw stirrer and thermoresistance, and joined to a thermostat for controlling the temperature, degassed with an hexane solution of AliBu₃ and dried in vacuum under nitrogen stream, 0.4 liter of n-hexane (purified by passing it on alumina columns) were fed and the temperature was breought to 50°C.

The catalyst solution was prepared as follows: 15.8 mg of the metallocene prepared in Example 1(B) and 229.3 mg of MAO were dissolved in 10 ml of toluene. 3.8 ml of this solution were transferred in 20 ml of toluene containing 1.043 mg of MAO and this solution was injected into the autoclave under propylene stream. The autoclave was pressurized at 4 bar-a with propylene and the polymerization was carried out for 90 minutes.

After coagulation in methanol and drying, 49 g of solid and transparent polypropylene, having intrinsic viscosity 1.41 dl/g, were separated. The GPC analysis gave the following values: M_{w} = 200,000; M_{w}/mₙ = 3.5.

### EXAMPLE 14 - Polymerization of propylene

Into a 1.35 liter steel autoclave, degassed warm under propylene stream, 480 g of propylene at 40°C were fed. By propylene overpressure, 11.5 ml of a toluene solution containing 174 mg of MAO and 3.7 mg of the metallocene prepared in Example 1(B), were injected. The temperature was brought to 50°C and the polymerization reaction was carried out for 1 hour.

After removing the unreacted monomer and drying the product, 53 g of solid, transparent polymer, soluble in warm chloroform, having intrinsic viscosity of 2.08 dl/g, were separated.

### EXAMPLE 15 - Polymerization of 1-butene

Into a 1.34 liter steel autoclave, degassed warm under propylene stream, 560 g of 1-butene were fed at a temperature of 50°C. By nitrogen overpressure, 5 ml of a toluene solution containing 350 mg of MAO were injected; then, 10 ml of a toluene solution containing 350 mg of MAO and 8.8 mg of the metallocene prepared in Example 1(B) were injected. The polymerization reaction was carried out at 50°C for 2 hours.

After removing the unreacted monomer and drying the product, 28 g of solid, transparent poly-1-butene were separated, which is completely amorphous, soluble in warm chloroform, and has intrinsic viscosity of 1.29 dl/g.

### EXAMPLE 16 - Copolymerization of propylene with 1-butene

Into a 1.4-l jacketed stainless-steel autoclave, equipped with magnetically driven stirrer, 35-ml stainless-steel vial and thermoresistance, previously dried in a propylene stream at 70°C, 275 g of propylene and 330 g of 1-butene were fed at a temperature of 50°C.

The catalyst solution was prepared as follows: 8 mg of the metallocene prepared in Example 1(B) and 846 mg of MAO were dissolved in 15 ml of toluene. This solution was injected into the autoclave by means of nitrogen pressure through the stainless-steel vial. The polymerization was carried out for 1 hour. Then, the reaction was stopped by adding 600 cc of CO. After degasing the residual monomers, the product was collected and dryed at 60°C under a reduced nitrogen pressure.

105 g of an amorphous copolymer, having 39% by weight of 1-butene units, T_{g} = -9.5 and intrinsic viscosity of 2.37 dl/g, were obtained.

### EXAMPLE 17 - Copolymerization of propylene with 1-hexene

It was worked as in Example 16, but the quantity of propylene which was fet into the autoclave was 120 g and, instead of the 1-butene, 200 g of 1-hexene were fed into the autoclave.

67 g of an amorphous copolymer, having 55.6% by weight of 1-hexene units, T_{g} = -15.8 and intrinsic viscosity of 1.65 dl/g, were obtained.

### EXAMPLE 18 - Copolymerization of propylene with 1-octene

It was worked as in Example 16, but the quantity of propylene which was fet into the autoclave was 130 g and, instead of the 1-butene, 270 g of 1-octene were fed into the autoclave.

75 g of an amorphous copolymer, having 66.3% by weight of 1-octene units, T_{g} = -32.3 and intrinsic viscosity of 1.71 dl/g, were obtained.

### EXAMPLE 19 - Copolymerization of propylene with 1-octene

It was worked as in Example 18, but the quantity of propylene which was fet into the autoclave was 200 g, and the quantity of 1-octene was 150 g.

6.2 g of an amorphous copolymer, having 39.4% by weight of 1-octene units, T_{g} = -16.3 and intrinsic viscosity of 2.15 dl/g, were obtained.

### EXAMPLE 20 - Copolymerization of propylene with 1-octene

It was worked as in Example 18, but the quantity of propylene which was fet into the autoclave was 270 g, and the quantity of 1-octene was 45 g.

27 g of an amorphous copolymer, having 12% by weight of 1-octene units, T_{g} = -1.6 and intrinsic viscosity of 2.22 dl/g, were obtained.

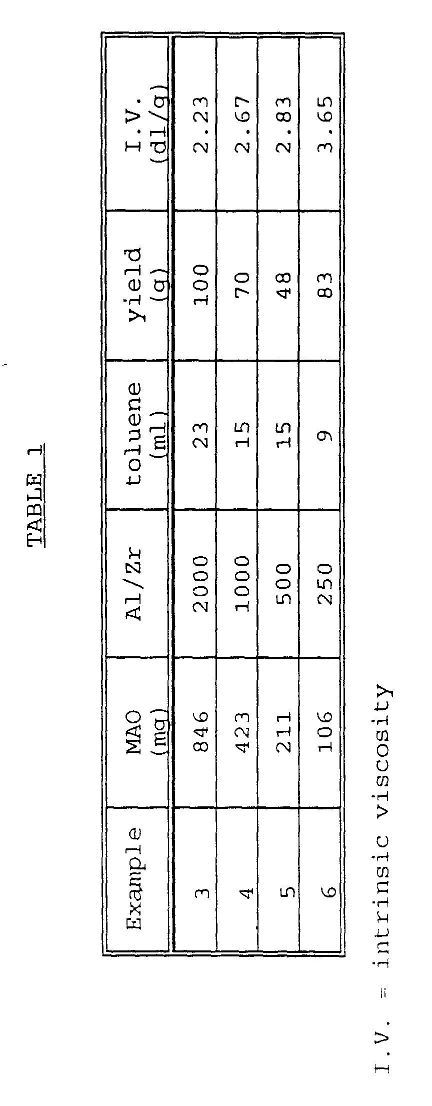

## Claims

1. A process for polymerizing propylene or higher α-olefins, said process comprising polymerizing propylene or a higher α-olefin in the presence of a catalyst, said catalyst comprising the product of the reaction between:
(A) a metallocene of formula (I) 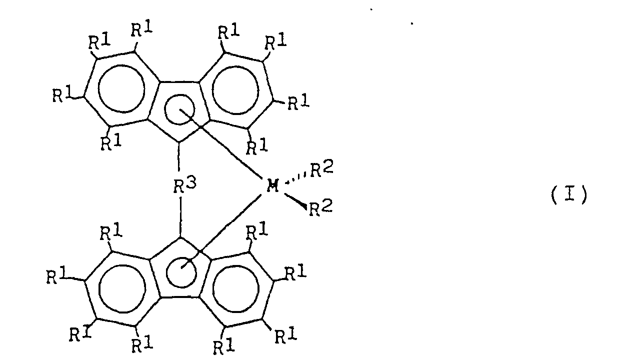
wherein substituents R¹, the same or different from each other, are hydrogen atoms, C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals, or C₇-C₂₀ arylalkyl radicals, optionally two adjacent substituents R¹ can form a cycle comprising from 5 to 8 carbon atoms and, furthermore, substituents R¹ can contain Si or Ge atoms; M is Ti, Zr or Hf;
substituents R², the same or different from each other, are halogen atoms, -OH, -SH, R¹, -OR¹, -SR¹, -NR¹₂, or PR¹₂, wherein R¹ is defined above;
the group R³ is selected from >CR¹₂, >SiR¹₂, >GeR¹₂, NR¹ or >PR¹, wherein R¹ is defined as above and optionally, when R³ is >CR¹₂, >SiR¹₂ or >GeR¹₂, both substituents R¹ can form a cycle comprising from 3 to 8 atoms, said metallocenes optionally being in the form of a reaction product with an aluminum organometallic compound of formula AlR⁴₃ or Al₂R⁴₆, wherein substituents R⁴, the same or different from each other, are R¹ or halogen, and
(B) an alumoxane, optionally mixed with an aluminum organo-metallic compound of formula AlR⁴₃ or Al₂R⁴₆, wherein substituents R⁴, the same or different from each other, are defined as above, or one or more compounds able to give a metallocene alkyl cation.

2. The process according to claim 1, wherein R³ is >SiR¹₂.

3. The process according to claim 1, wherein R³ is >Si(CH₃)₂.

4. The process according to claim 1, wherein the metallocene is dimethylsilandiylbis (fluorenyl)zirconium dichloride.

5. The process according to claim 1, wherein the alumoxane is methylalumoxane.

## Patentansprüche

1. Verfahren zum Polymerisieren von Propylen oder höheren α-Olefinen, wobei das Verfahren Polymerisieren von Propylen oder einem höheren α-Olefin in Gegenwart eines Katalysators umfasst, wobei der Katalysator das Produkt der Reaktion zwischen:
(A) einem Metallocen der Formel (I) 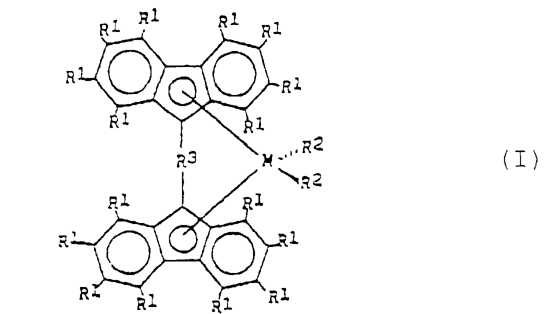
worin die Substituenten R¹, gleich oder verschieden voneinander, Wasserstoffatome, C₁-C₂₀-Alkylreste, C₃-C₂₀-Cycloalkylreste, C₂-C₂₀-Alkenylreste, C₆-C₂₀-Arylreste, C₇-C₂₀-Alkylarylreste oder C₇-C₂₀-Arylalkylreste darstellen, wobei gegebenenfalls zwei benachbarte Substituenten R¹ einen 5 bis 8 Kohlenstoffatome umfassenden Ring bilden können und weiterhin Substituenten R¹ Si- oder Ge-Atome enthalten können; M Ti, Zr oder Hf darstellt;
Substituenten R², gleich oder verschieden voneinander, Halogenatome, -OH, -SH, R¹, -OR¹, -SR¹, -NR¹₂
oder PR¹₂, worin R¹ wie vorstehend definiert ist, darstellen,
wobei die Gruppe R³ ausgewählt ist aus >CR¹₂, >SiR¹₂, >GeR¹₂, NR¹ oder >PR¹, worin R¹ wie vorstehend definiert ist und gegebenenfalls, wenn R³ >CR¹₂, >SiR¹₂ oder >GeR¹₂ bedeutet, beide Substituenten R¹ einen 3 bis 8 Atome umfassenden Ring bilden können, wobei die Metallocene gegebenenfalls in Form eines Reaktionsprodukts mit einer organometallischen Aluminiumverbindung der Formel AlR⁴₃ oder Al₂R⁴₆ vorliegen, wobei die Substituenten R⁴, gleich oder verschieden voneinander, R¹ oder Halogen darstellen, und
(B) einem Alumoxan, gegebenenfalls vermischt mit einer organometallischen Aluminiumverbindung der Formel AlR⁴₃ oder Al₂R⁴₆, wobei die Substituenten R⁴, gleich oder verschieden voneinander, wie vorstehend definiert sind oder einer oder mehreren Verbindungen, die ein Metallocenalkylkation ergeben können,
ümfasst.

2. Verfahren nach Anspruch 1, wobei R³ >SiR¹₂ darstellt.

3. Verfahren nach Anspruch 1, wobei R³ >Si(CH₃)₂ darstellt.

4. Verfahren nach Anspruch 1, wobei das Metallocen Dimethylsilandiylbis(fluorenyl)zirconiumdichlorid darstellt.

5. Verfahren nach Anspruch 1, wobei das Alumoxan Methylalumoxan darstellt.

## Revendications

1. Procédé pour polymériser le propylène ou des α-oléfines supérieures, ledit procédé comprenant la polymérisation du propylène ou d'une α-oléfine supérieure en présence d'un catalyseur, ledit catalyseur comprenant le produit de la réaction entre :
(A) un métallocène de formule (I) 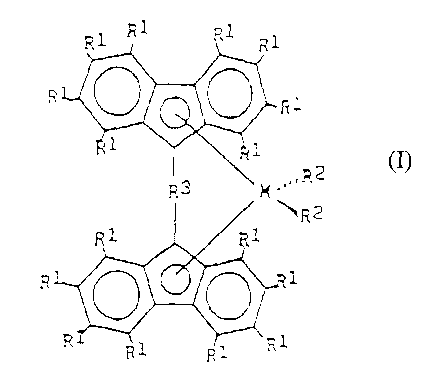
dans laquelle les substituants R¹, identiques ou différents entre eux, sont des atomes d'hydrogène, des radicaux alkyles en C₁-C₂₀, des radicaux cycloalkyles en C₃-C₂₀, des radicaux alkényles en C₂-C₂₀, des radicaux aryles en C₆-C₂₀, des radicaux alkylaryles en C₇-C₂₀ ou des radicaux arylalkyles en C₇-C₂₀, le cas échéant deux substituants adjacents R¹ peuvent former un cycle comprenant de 5 à 8 atomes de carbone et en outre, les substituants R¹ peuvent contenir des atomes Si ou Ge ; M est Ti, Zr ou Hf ;
les substituants R², identiques ou différents entre eux, sont des atomes d'halogène, -OH, -SH, R¹, -OR¹, -SR¹, -NR¹₂, ou PR¹₂ dans lequel R¹ est défini comme ci-dessus ;
le groupe R³ est choisi parmi >CR¹₂, >SiR¹₂, >GeR¹₂, NR¹ ou >PR¹, dans lequel R¹ est défini comme ci-dessus et le cas échéant, quand R³ est >CR¹₂, >SiR¹₂, >GeR¹₂, les deux substituants R¹ peuvent former un cycle comprenant de 3 à 8 atomes, lesdits métallocènes étant le cas échéant sous la forme d'un produit de réaction avec un composé organométallique d'aluminium de la formule AlR⁴₃ ou Al₂R⁴₆, dans laquelle les substituants R⁴, identiques ou différents entre eux, sont R' ou halogène, et
(B) un alumoxane, le cas échéant mélangé avec un composé organométallique de formule AlR⁴₃ ou Al₂R⁴₆, dans laquelle les substituants R⁴, identiques ou différents entre eux, sont définis comme ci-dessus, ou un ou plusieurs composés capables de donner un cation métallocène alkyle.

2. Procédé selon la revendication 1, dans lequel R³ est >Si¹₂.

3. Procédé selon la revendication 1, dans lequel R³ est >Si(CH₃)₂.

4. Procédé selon la revendication 1, dans lequel le métallocène est le dichlorure de diméthylsilanediylbis (fluorényl)zirconium.

5. Procédé selon la revendication 1, dans lequel l'alumoxane est le méthylalumoxane.
